# EUROPEAN PATENT SPECIFICATION

(11) **EP 3 957 171 B1**
(45) Date of publication and mention of the grant of the patent: **13.11.2024**
(21) Application number: 21202454.1
(22) Date of filing: 08.02.2017
(51) Int. Cl.: A01K 61/95, A01K 61/13, A01K 61/60

(54) **DEVICE AND METHOD FOR RECORDING AND MONITORING HEALTH AND DEVELOPMENT IN LIVING FISH**
VORRICHTUNG UND VERFAHREN ZUR ERFASSUNG UND ÜBERWACHUNG DER GESUNDHEIT UND ENTWICKLUNG BEI LEBENDEN FISCHEN
SYSTÈME ET PROCÉDÉ D'ENREGISTREMENT ET DE SUIVI DE LA SANTÉ ET DU DÉVELOPPEMENT CHEZ DES POISSONS VIVANTS

(30) Priority: 08.02.2016 NO 20160199
(43) Date of publication of application: 23.02.2022
(62) Divisional of application: 17713432.7
(73) Proprietor: Biosort AS, 1364 Fornebu (NO)
(72) Inventor: Saugen, Bernt, N-1350 Lommedalen (NO); Idsø, Svein, Tore, N-0477 Oslo (NO); Hauge, Geir, Stang, N-1163 Oslo (NO)
(74) Representative: Onsagers AS

(56) References cited:
- WO-A1-2011/115496
- WO-A1-2014/204319
- WO-A2-2013/108251
- US-A1- 2014 376 783

## Description

The present invention concerns a device and method for recording and monitoring health and physical development in fish.

Today, the aqua culture business is a huge industry, which is competitive compared to other ways of producing animal derived food. The industry is relatively recent, and has large growth ambitions in the years to come. Presently, the industry is characterized by manual operations, and the level of precision is low in areas like fish counting, bio mass measurement, sea lice counting, disease surveillance, as well as monitoring fish health and growth rate.

As of today, it is not uncommon to experience a 15-20 % fish loss in a production cycle, and this causes huge economic losses, poor utilization of resources, poor fish food utilization, larger discharge of nutrient salts into the environment, and poor fish well-being (*"*Tap av laksefisk i sjø; Hogne Bleie, 2004*"*). Fish lice and several contagious diseases is a growing problem for the business. Resistance is a known phenomenon in excessive use of chemicals or drugs on whole populations of a species.

The treatment regimens of today are largely performed on all the fish in a net cage, which means that up to 200 000 fish gets the same treatment. The treatment may be medication, use of chemicals, mechanical treatment, or slaughtering. The consequences are enhanced risk of resistance, as well as unnecessary large discharge of chemicals and drugs into the environment.

Further, the present treatment methods often involve starving fish, fish concentrating operations, as well as pumping fish into a different net cage or into a fish-tank ship. A fish concentrating operation comprises making the available swimming volume for the fish smaller. This is for instance performed by decreasing the volume of the net cages, and thus, increase the density of fish. For instance, this is performed by concentrating the fish in an area for treatment in the net cages, or for concentrating the fish for transfer onto a fish-tank ship using suction hoses or landing nets.

Generally, a fish-tank ship has an integrated method of concentrating the fish when it is time to unload the live fish off the ship. For example, this may be a bulkhead, which is moveable through the tank in the ship holding the fish. This bulkhead is moved through the tank to force the fish against the part of the tank from which the fish are released.

These treatments stress the fish, inflict damage, and possible loss of mucus layer. The mucous layer *(mucosa epithelia)* has been shown to be extremely important to the fish resistance against sea lice, and pathogens and loss of mucous layer makes the fish more susceptible than they are after suffering from wounds.

Today, the assessment of fish health in the aqua culture industry is primarily based on manual solutions; either directly through netting fish and performing manual inspection, and possible sampling, possibly using an underwater camera and analysing the images manually. No automatic solutions have been established, for analysing fish health, or solutions monitoring single individuals over time, and no solutions are established to sort out diseased fish. Presently, different automatic systems exist for measuring bio mass; however, these have an error of about 10%, and, the industry are looking for solutions providing bio mass measurements of greater accuracy.

NO 330863 discloses a device and method of measuring average weight, and feeding ad libidum in aqua culture plants. Several cameras are lowered into the net cages, and images are taken of the fish from different angles. The images are analysed to provide an indication of health condition of the fish, and average weight of the fish. Individual fish may be recognized, which is useful in adjusting average weight, calculate swimming speed (as a measure of fish health and number of fish per volume), etc.

NO 331843 describes a method and system of recognizing, treating, sorting, and documenting live fish. The main purpose of the system is to vaccinate fish, and the possibility of controlling the vaccination, possibly sort out undesired fish before vaccination. The system uses image recognition of fish being transported on a moving belt during the vaccination procedure.

WO 2005025309 describes a system for counting and estimating fish weight, possibly several fish simultaneously in a channel/pipe. To achieve this, several CCD sensors are used, which register the fish and calculate volume, and thus, the weight of each fish .

US2014376783 describes a system for identifying subjects of the same species in a population in order to monitor the population. The subjects are identified by means of image processing of images captured when the subject is placed isolated in a dedicated location and in a predetermined orientation and/or position to enable the imaging apparatus to capture image data which enables the subject identification apparatus to uniquely identify the selected subject.

WO2013108251 describes a system for guiding fish one at a time from a reservoir to a desired destination. Images of the fish may be captured during the transport between locations, and the images may be analyzed in order to categorize the fish and possibly choose destination according to the categorization. The fish is placed in a separate container for identification.

WO2014204319 describes an apparatus according to the preamble of claim 1, and method for treating fish in cages for fish farming. The method described herein guides the fish into the fish cage wherein lice and other parasites on the fish are removed.

Consequently, there is a need for new methods of monitoring and treating fish in aqua culture plants.

The object of the present invention is to provide a device and a method of recording and monitoring health and physical development of fish.

The obj ect of the invention is achieved by a device according to claim 1 and a method according to claim 8. According to an example which does not form part of the invention, a device for recording and monitoring health and physical development of fish comprises at least an imaging device adapted for imaging a recording area, a data processor, a memory unit, and a guiding device for guiding fish through a recording area. The data processor is adapted to analysing images from the imaging device and identify features of the fish in the recording area, wherein the features are characteristic of the health condition of the fish and individuals. The features are stored in the memory unit.

According to an example which does not form part of the invention, a method of recording and monitoring health and physical development of fish comprises, in one embodiment:
a) imaging fish passing a recording area using at least an imaging device,
b) analysing images from the imaging device, and identify features of fish which characterize health condition and individuals,
c) using the identified features to create a registry of individuals having passed through the recording area, and store this information in a memory unit, and
d) recording the features characterizing health condition in the registry for each individual.

According to the invention defined in claim 1, a device for recording and monitoring the health and physical development of live fish in an aquaculture cage as disclosed is comprising, a chamber (40) arranged below the water surface, a channel / tube which (41) leads from the chamber (40) and up to the water surface and gives the fish in the chamber access to the surface, and a device (42) for recording and monitoring the health and physical development of fish placed in the channel / tube (41) so that the fish is guided through a recording area where the fish's health and physical development are monitored

The invention defined in claim 8 discloses a method of recording and monitoring the health and physical development of live fish in an aquaculture net cage. The method providing for placing fish in a chamber (40) arranged below the water surface, providing the fish in the chamber access to the surface via a channel / tube (41) leading from the chamber (40) and up to the water surface, and recording and monitoring the health and physical development of fish, which via the channel / tube is led through a recording area where the health and physical development of the fish are monitored

The imaging device is a device capturing images of the recording area, and thus, possible fish situated in the recording area. Thus, by allowing fish desired to be monitored to pass through the recording area, images of the fish are recorded. The imaging device may comprise one or more cameras or other imaging sensors suitable for imaging electromagnetic waves of desired wavelength. This may be x-rays, ultraviolet light, visible light, infrared light, microwaves, etc. By using several sensors/cameras, a multidimensional imaging of the fish is possible.

In one embodiment, the recording area is formed mainly to be covered by the field of view of the imaging device, such that the fish cannot pass without being imaged. In this way, a complete recording of the fish desired to be recorded and monitored is secured. In most instances, the recording area is partly or completely localised under water. Thus, the fish can swim freely through the recording area, and the recording will thus be as stress free as possible for the fish.

The guiding device is a device causing the fish to pass through the recording area. This may be e.g. a pump, suction hose, or other suction device, or a device pushing the fish against and through the recording area. Traditionally, this is performed when fish shall be transferred from a net cage to another place, which is a process called concentration. Other guiding devices may comprise an attracting means arranged at one side of the recording area, and a screen device to prevent the fish from reaching the attracting means without passing the recording area. The attracting means may for instance be light or bait, or it may be present in the form of a "fish lice snorkel", that is, a channel leading to the surface, through which the fish swim up to reach air.

A data processor analyses the images from the imaging device, and analyses features of the fish in the images, such as bodily dimensions, geometry, pigmentation, colour, condition of mucous layer, damages and/or other features characteristic of health condition, individual recognition, or physical development. One or more of the features is/are used for identifying single individuals, and each single individual are stored in the registry of the memory unit. Additional features are recorded in the same registry, for each individual.

The memory unit is a unit capable of storing data. In many embodiments, the memory unit will be physically connected to the data processor; however, it may also be wirelessly connected to the data processor, either in the same localisation, in a remote location, or in the form of a so-called cloud storage solution.

In an embodiment, the data processor may be adapted to calculate biomass for a group of fish. For example, based on bodily dimensions, the biomass of the complete group of fish can be calculated. If the recording and monitoring of health and physical development of live fish shall be performed in an aqua culture net cage, or in another delimited population of fish, in certain embodiments, a sub group of fish may be recorded and the mass calculated, and then, these mass data can be extrapolated to estimate biomass for the total population of fish.

At a later stage, a) through d) above can be repeated to be able to analyse the development of the fish. The features characterising health condition are compared to features of the same individual for at least one previous recording, and the comparison of features is used to analyse the development of the fish. Examples of this are development of individual wounds, revelation of anaemia in single individuals, e.g. based on deviations from expected growth based on data from previous measurements; however, which still have a momentary observable weight within the normal in the population, recording of increased number of parasites on the fish, etc.

The steps above may be repeated once or several times with a desired time interval, e.g. each day, each week, each month, etc.

In an embodiment, the device comprises two chambers arranged on each side of the recording area, and, guiding devices guides the fish from one chamber to the next via the recording area. The guiding of the fish may for instance be performed as mentioned above. The chambers may for example be two chambers in a net cage, two net cages may constitute a chamber each, or, other arrangements. In the case of two net cages with a guiding device arranged between them for transfer of the fish, the fish may for instance be guided into the guiding device using a concentrating device in the net cage in which the fish is initially situated, which concentrating device is moved or in other ways makes the volume of the net cage smaller, such that the fish by itself chose to swim into the guiding device to reach an area of more swimming space. This may be achieved with a plate, net, etc.

In an embodiment, the device according to the invention comprises a sorting device arranged in or after the recording area for sorting out and/or kill fish.

The sorting device may be connected to a treatment area for maintaining and treating fish for diseases or parasites, such that fish which have been sorted out is kept in another location than the other fish, e.g. for sea lice treatment, vaccination, or other treatment for different diseases.

The sorting device may also be connected to a separate area for maintaining fish of a specific size. For example, all fish above a certain size may be sorted out into an assigned area for delivery to slaughter, and smaller fish are given more time to grow.

In an embodiment, the system comprises a device for removal of parasites using light, e.g. as described in NO 331345. Other known treatment methods may be used, such as Thermalicer (NO 332298), fish tank ship treatment, etc. Such systems may be integrated into the recording area, or may be connected to the device before or after the recording area, e.g. in a net cage.

In an embodiment, the device may comprise a RFID reader. In this case, each individual have been tagged with a RFID tag for use in identification of individuals. This may be used as a substitute for, or in addition to, individual recognition in the images, and may also be used to confirm recording of individuals.

The invention will now be described in more detail using examples, and with reference to the appended Figures.
Figure 1 schematically shows a device for recording and monitoring fish health.
Figure 2 schematically shows an example used in an aqua culture net cage.
Figure 3 shows another example used in an aqua culture net cage.
Figure 4 shows an embodiment of the invention used in an aqua culture net cage.
Figure 5 shows a further example used in an aqua culture net cage.
Figure 6 shows using two aqua culture net cages.
Figure 7 shows another embodiment of the invention used in an aqua culture net cage.
Figure 8 shows another example used in an aqua culture net cage.
Figure 9 shows using two aqua culture net cages. In the description of figures, a device for recording and monitoring health and physical development of fish is generally disclosed as a fish health scanner.

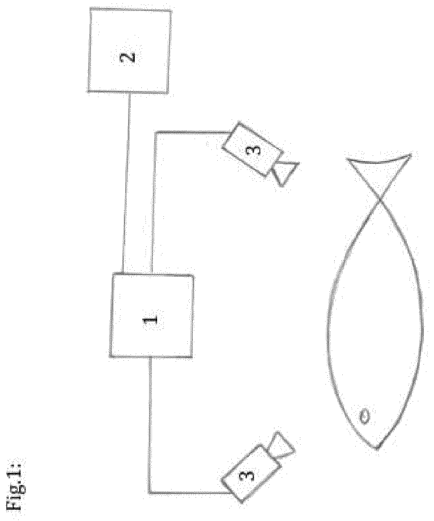

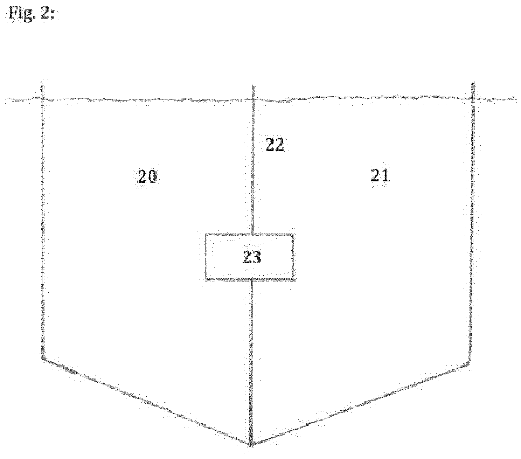

Figure 1 schematically shows a device for recording and monitoring fish health, comprising two imaging devices in the form of cameras 3 which images fish localised in a recording area, to record fish health and fish wellbeing of single individuals swimming freely, e.g. in an aqua culture net cage. The imaging data are processed by a data processor 1 to analyse images from the imaging device and identify features of the fish characterising health condition and individuals. Data/features for each individual are stored in a database/registry 2 for later use. Figure 2 schematically shows an aqua culture net cage divided by a vertical separation wall 22. The separation wall divides the net cage into two separate chambers 20 and 21. The two chambers are connected by a guiding device in the form of a channel 23, through which the fish are able to swim freely. In the channel, there is a fish health scanner, which registers fish health and fish wellbeing for each fish, as described above. The fish are attracted to or pushed from one chamber to the other in a specified time interval to provide a generally continuous monitoring of all the fish

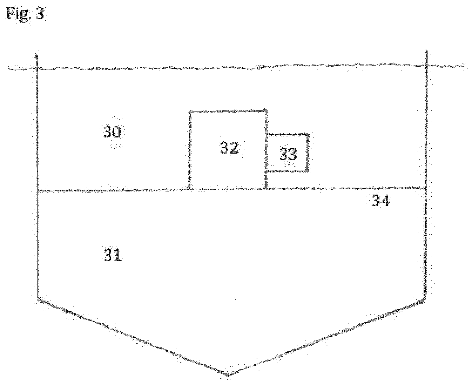

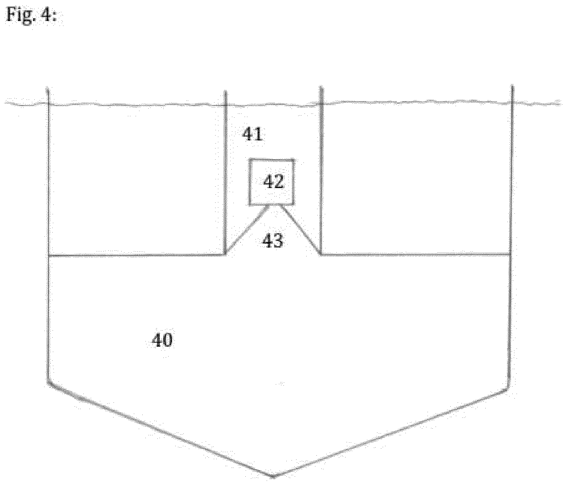

Figure 3 schematically shows an aqua culture net cage having a horizontal separating wall 34 in the net cage, which wall divides the net cage into a lower chamber 31 and an upper chamber 30. Recording and monitoring of fish health is initiated when all the fish are situated in the lower chamber 31. The fish are attracted into chamber 32 using light, food, or by gentle pushing from chamber 31. When a suitable number of fish have entered chamber 32, it is closed off from chamber 31. The fish are guided or pushed farther into the fish health scanner 33, and allowed to swim freely into the upper chamber 30. When substantially all the fish are transferred from chamber 31 into chamber 30, the process is finished, and, substantially all the fish have been recorded. The process may be performed manually or automatically, and is repeated in specified time intervals of typically 4-8 weeks to create a complete picture of fish health and fish wellbeing over time. Figure 4 schematically shows an aqua culture net cage with a sea lice snorkel 41. The fish are kept in chamber 40, and, thus, are forced to remain at a depth of 8-10 meters to avoid sea lice and other parasites, which are mainly residing in the upper layers of the water column. Salmon have an open air bladder, which has to be replenished with air every 7-14 days. Then, the fish will swim towards the available surface through an inner tube in the net cage, herein called a sea lice snorkel 41. This cyclic migration to the surface is exploited to guide 43 fish through a fish health scanner 42. The fish can freely swim back down again through a trap inside the snorkel.

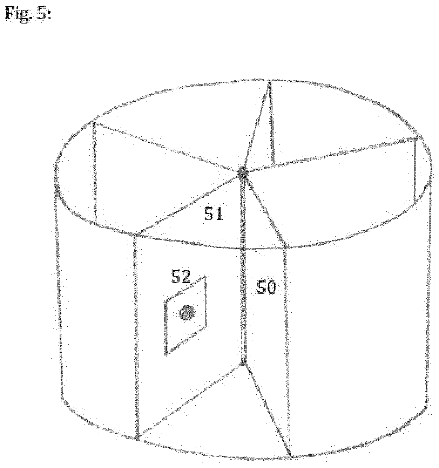

Figure 5 schematically shows an aqua culture net cage with movable bulkheads 50 and 51. The movable bulkheads are used to transfer fish from one chamber to the next through a fish health scanner 52, which record fish health and fish wellbeing of passing fish.

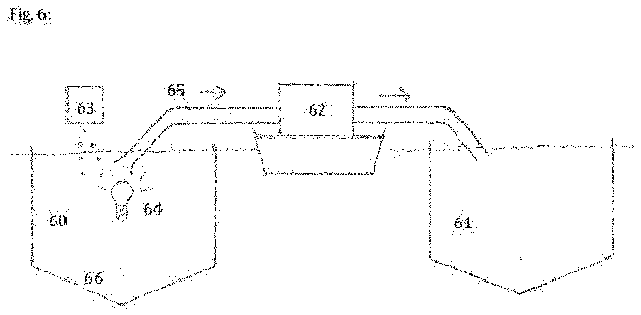

Figure 6 schematically shows two aqua culture net cages 60 and 61. Fish are in net cage 60 attracted in towards the mouth of a suction hose 65 using light 64, food 63, or gentle pushing 66. The fish are transported up into a holding chamber 62 on a raft, at which they are scanned before being transported to net cage 61.

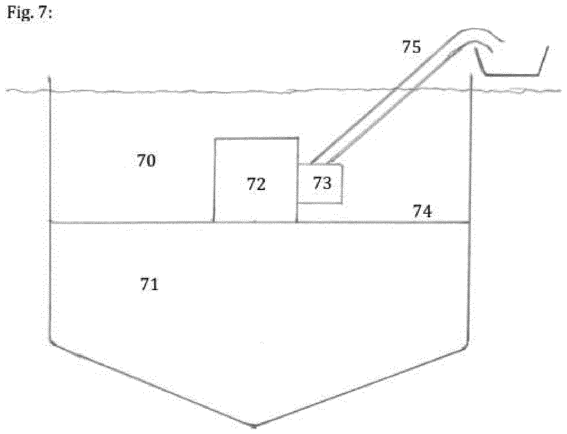

Figure 7 schematically shows an aqua culture net cage having a horizontal separating wall 74, which divides the net cage into a lower chamber 71 and an upper chamber 70. The recording of fish health is initiated when all the fish are kept in the lower chamber 71. The fish are attracted into chamber 72 using light, food, or gentle pushing in chamber 71. When a suitable number of fish has arrived in chamber 72, this chamber is closed off from chamber 71. The fish are guided or pushed further into the fish health scanner 73, and, healthy and approved fish swim freely into upper chamber 70. Weak, injured, or diseased fish are sorted out through a hose 75 to an external chamber. Following the transfer of substantially all the fish from chamber 71 to chamber 70, the process is finished, and substantially all the fish have been scanned and sorted. The processes are performed automatically and typically last 2-4 days. The cycle is repeated at specified time intervals, typically 4-8 weeks, to create a complete picture of fish health and fish wellbeing over time.

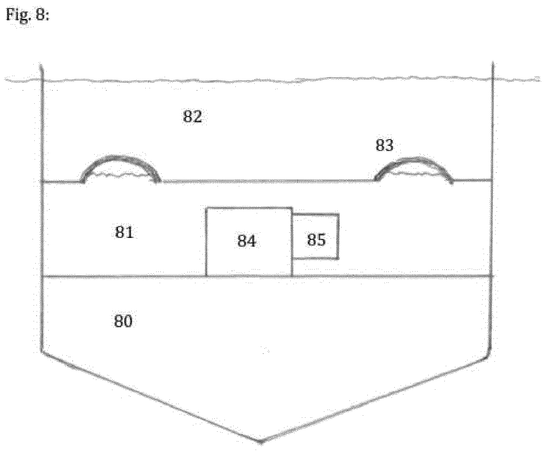

Figure 8 schematically shows an aqua culture net cage in which fish are kept permanently submerged in chambers 80 and 81. The fish have access to an artificial surface to replenish the air bladder in open domes 83 filled with air. The dome may have any suitable shape, e.g. rounded, or square. The fish are alternatingly transferred from chamber 80 to chamber 81 through a guiding device 84 to fish health scanner 85 using gentle pushing operations or attraction.

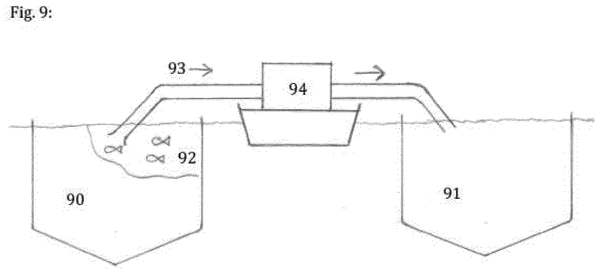

Figure 9 schematically shows two aqua culture net cages 90 and 91. Fish are transferred from net cage 90 to 91 using a traditional push and pump operation 92. The fish are pumped, or swim, through a fish health scanner 94 for recording and sorting.

## Claims

1. Device for recording and monitoring the health and physical development of live fish in an aquaculture cage, said device comprising:
- a chamber (40) arranged below a water surface, in which the live fish are kept; and
- a fish health scanner device (42) for recording and monitoring the health and physical development of fish,
said device being **characterized in that** it further comprises an inner tube (41) which leads from the chamber (40) and up to the water surface and gives the fish in the chamber access to the water surface, and wherein the fish health scanner device (42) for recording and monitoring the health and physical development of fish is placed in the inner tube (41) so that the fish is guided through a recording area located in the inner tube where the fish's health and physical development are monitored.

2. The device according to claim 1, wherein a trap device is arranged in the inner tube so that the fish can migrate freely back down to the chamber.

3. The device according to claim 1, comprising a data processor and a memory unit, wherein the data processor is adapted to analyze images from the imaging device and identify features of the fish that characterize individuals and store the characteristics in the memory unit.

4. The device according to claim 1, wherein the recording area is completely or partly located under water.

5. The device according to claim 1, wherein attracting means, such as light, air or bait, is located on one side of the recording area.

6. The device according to one of the preceding claims, comprising a sorting device for sorting and/or killing fish, the sorting device being arranged in or after the registration area.

7. The device according to claim 6, further comprising a treatment area for storage and treatment of fish for diseases or parasites wherein the sorting device is connected to the treatment area .

8. A method of recording and monitoring the health and physical development of live fish in an aquaculture cage, wherein said method comprises placing fish in a chamber (40) arranged below a water surface, wherein said method further comprises
- providing the fish in the chamber access to the water surface via an inner tube (41) leading from the chamber (40) and up to the water surface, and
- recording and monitoring the health and physical development of fish, which via the inner tube is led through a recording area where the health and physical development of the fish are monitored.

9. The method according to claim 8, wherein the fish can freely migrate back down to the chamber in a trap device arranged in the inner tube.

10. The method according to claim 8, wherein a data processor analyzes images from the imaging device and identifies characteristics of the fish that characterize the individual fish and stores the characteristics in a memory unit.

11. The method according to claim 8, comprising attracting the fish by means of attracting means, such as light, air or bait placed on one side of the recording area.

12. The method according to any one of claims 8 -11, comprising identifying fish with impaired health and sorting out and/or killing said fish in or after the recording area.

13. The method according to claim 12, comprising transferring fish to a treatment area for storing and treating the fish for diseases or parasites.

## Patentansprüche

1. Vorrichtung zum Erfassen und Überwachen der Gesundheit und physischen Entwicklung von lebenden Fischen in einem Aquakulturgehege, wobei die Vorrichtung Folgendes umfasst:
- eine Kammer (40), die unter einer Wasseroberfläche angeordnet ist und in der die lebenden Fische gehalten werden; und
- eine Fischgesundheitsabtastvorrichtung (42) zum Erfassen und Überwachen der Gesundheit und physischen Entwicklung von Fischen,
wobei die Vorrichtung **dadurch gekennzeichnet ist, dass** sie ferner eine innere Röhre (41) umfasst, die von der Kammer (40) und bis hinauf zu der Wasseroberfläche führt und den Fischen in der Kammer Zugang zu der Wasseroberfläche verschafft, und wobei die Fischgesundheitsabtastvorrichtung (42) zum Erfassen und Überwachen der Gesundheit und physischen Entwicklung von Fischen in der inneren Röhre (41) platziert ist, sodass die Fische durch einen Erfassungsbereich geführt werden, der sich in der inneren Röhre befindet, in der die Gesundheit und physische Entwicklung der Fische überwacht werden.

2. Vorrichtung nach Anspruch 1, wobei eine Reusenvorrichtung in der inneren Röhre angeordnet ist, sodass die Fische frei zurück zu der Kammer hinabwandern können.

3. Vorrichtung nach Anspruch 1, umfassend einen Datenprozessor und eine Speichereinheit, wobei der Datenprozessor dazu ausgelegt ist, Bilder von der Bildgebungsvorrichtung zu analysieren und Eigenschaften der Fische zu identifizieren, die Individuen charakterisieren, und die Eigenschaften in der Speichereinheit zu speichern.

4. Vorrichtung nach Anspruch 1, wobei sich der Erfassungsbereich vollständig oder teilweise unter Wasser befindet.

5. Vorrichtung nach Anspruch 1, wobei sich ein Lockmittel, wie etwa Licht, Luft oder ein Köder, auf einer Seite des Erfassungsbereichs befindet.

6. Vorrichtung nach einem der vorhergehenden Ansprüche, umfassend eine Sortiervorrichtung zum Sortieren und/oder Töten von Fischen, wobei die Sortiervorrichtung in oder nach dem Erfassungsbereich angeordnet ist.

7. Vorrichtung nach Anspruch 6, ferner umfassend einen Behandlungsbereich zur Haltung und Behandlung von Fischen gegen Erkrankungen oder Parasiten, wobei die Sortiervorrichtung mit dem Behandlungsbereich verbunden ist.

8. Verfahren zum Erfassen und Überwachen der Gesundheit und physischen Entwicklung von lebenden Fischen in einem Aquakulturgehege, wobei das Verfahren Platzieren von Fischen in einer Kammer (40), die unter einer Wasseroberfläche angeordnet ist, umfasst, wobei das Verfahren ferner Folgendes umfasst
- Bereitstellen eines Zugangs zu der Wasseroberfläche für die Fische in der Kammer über eine innere Röhre (41), die von der Kammer (40) und bis hinauf zu der Wasseroberfläche führt, und
- Erfassen und Überwachen der Gesundheit und physischen Entwicklung von Fischen, die über die innere Röhre durch einen Erfassungsbereich geführt werden, in dem die Gesundheit und physische Entwicklung der Fische überwacht werden.

9. Verfahren nach Anspruch 8, wobei die Fische in einer in der inneren Röhre angeordneten Reusenvorrichtung frei zurück zu der Kammer hinabwandern können.

10. Verfahren nach Anspruch 8, wobei ein Datenprozessor Bilder von der Bildgebungsvorrichtung analysiert und Eigenschaften der Fische identifiziert, welche die einzelnen Fische charakterisieren, und die Eigenschaften in einer Speichereinheit speichert.

11. Verfahren nach Anspruch 8, umfassend Anlocken der Fische durch ein Lockmittel, wie etwa Licht, Luft oder einen Köder, das auf einer Seite des Erfassungsbereichs platziert ist.

12. Verfahren nach einem der Ansprüche 8-11, umfassend Identifizieren von Fischen mit beeinträchtigter Gesundheit und Aussortieren und/oder Töten der Fische in oder nach dem Erfassungsbereich.

13. Verfahren nach Anspruch 12, umfassend Überführen von Fischen in einen Behandlungsbereich zum Halten und Behandeln der Fische gegen Erkrankungen oder Parasiten.

## Revendications

1. Dispositif d'enregistrement et de surveillance de la santé et du développement physique de poissons vivants dans une cage d'aquaculture, ledit dispositif comprenant :
- une chambre (40) agencée sous une surface d'eau, dans laquelle les poissons vivants sont gardés ; et
- un dispositif scanneur de santé des poissons (42) pour enregistrer et surveiller la santé et le développement physique des poissons, ledit dispositif étant **caractérisé en ce qu'**il comprend en outre un tube interne (41) qui part de la chambre (40) et remonte jusqu'à la surface de l'eau et donne aux poissons dans la chambre un accès à la surface de l'eau, et dans lequel le dispositif scanneur de santé des poissons (42) pour enregistrer et surveiller la santé et le développement physique des poissons est placé dans le tube interne (41) de manière à guider les poissons à travers une zone située dans le tube interne où la santé et le développement physique des poissons sont surveillés.

2. Dispositif selon la revendication 1, dans lequel un dispositif de piégeage est agencé dans le tube interne de sorte que les poissons puissent migrer librement à nouveau vers le bas jusqu'à la chambre.

3. Dispositif selon la revendication 1, comprenant un processeur de données et une unité de mémoire, le processeur de données étant adapté pour analyser des images provenant du dispositif d'imagerie et identifier des caractéristiques des poissons qui caractérisent des individus et stocker les caractéristiques dans l'unité de mémoire.

4. Dispositif selon la revendication 1, dans lequel la zone d'enregistrement est entièrement ou partiellement située sous l'eau.

5. Dispositif selon la revendication 1, dans lequel des moyens d'attraction, tels que de la lumière, de l'air ou un appât, sont situés d'un côté de la zone d'enregistrement.

6. Dispositif selon l'une des revendications précédentes, comprenant un dispositif de tri pour trier et/ou abattre des poissons, le dispositif de tri étant agencé dans ou après la zone d'enregistrement.

7. Dispositif selon la revendication 6, comprenant en outre une zone de traitement pour le stockage et le traitement des poissons pour des maladies ou des parasites, dans lequel le dispositif de tri est relié à la zone de traitement.

8. Procédé d'enregistrement et de surveillance de la santé et du développement physique de poissons vivants dans une cage d'aquaculture, dans lequel le procédé comprend le placement des poissons dans une chambre (40) agencée sous une surface d'eau, dans lequel ledit procédé comprend en outre :
- la fourniture aux poissons dans la chambre d'un accès à la surface de l'eau par l'intermédiaire d'un tube interne (41) partant de la chambre (40) et remontant jusqu'à la surface de l'eau, et
- l'enregistrement et la surveillance de la santé et du développement physique des poissons, qui, par l'intermédiaire du tube interne, sont menés à travers une zone d'enregistrement où la santé et le développement physique des poissons sont surveillés.

9. Procédé selon la revendication 8, dans lequel les poissons peuvent migrer librement à nouveau vers le bas jusqu'à la chambre dans un dispositif de piégeage agencé dans le tube interne.

10. Procédé selon la revendication 8, dans lequel un processeur de données analyse des images provenant du dispositif d'imagerie et identifie des caractéristiques des poissons qui caractérisent les poissons individuels et stocke les caractéristiques dans une unité de mémoire.

11. Procédé selon la revendication 8, comprenant le fait d'attirer les poissons au moyen de moyens d'attraction, tels que de la lumière, de l'air ou un appât, placés d'un côté de la zone d'enregistrement.

12. Procédé selon l'une quelconque des revendications 8 à 11, comprenant l'identification des poissons à la santé dégradée et le tri et/ou l'abattage desdits poissons dans ou après la zone d'enregistrement.

13. Procédé selon la revendication 12, comprenant le transfert des poissons vers une zone de traitement pour stocker et traiter les poissons pour des maladies ou des parasites.
